# EUROPÄISCHE PATENTSCHRIFT

(11) **EP 3 046 692 B1**
(45) Veröffentlichungstag und Bekanntmachung des Hinweises auf die Patenterteilung: **19.06.2019**
(21) Anmeldenummer: 14766510.3
(22) Anmeldetag: 18.09.2014
(51) Int. Cl.: B21B 35/14, F16D 1/06, F16D 1/02

(54) **DREHFESTE WELLE-NABE-VERBINDUNG, INSBESONDERE WALZENZAPFEN-TREFFER-VERBINDUNG FÜR DEN EINSATZ IN WALZWERKEN, ZAPFENAUFNEHMER UND ANTRIEBSANORDNUNG FÜR EIN WALZWERK ZUM ANTRIEB ZUMINDEST EINER ARBEITSWALZE**
CONJOINTLY ROTATING SHAFT-HUB CONNECTION, PARTICULARLY A ROLL JOURNAL-STRIKER CONNECTION FOR USE IN ROLLING MILLS, JOURNAL HOLDER AND DRIVE ARRANGEMENT FOR A ROLLING MILL FOR DRIVING AT LEAST ONE WORK ROLL
LIAISON ARBRE-MOYEU, EN PARTICULIER LIAISON TOURILLON DE CYLINDRE-TRÈFLE, SOLIDAIRE EN ROTATION DESTINÉE À ÊTRE RÉALISÉE DANS DES LAMINOIRS, ÉLÉMENT DE RÉCEPTION DE TOURILLON ET ENSEMBLE D'ENTRAÎNEMENT POUR UN LAMINOIR, DESTINÉ À ENTRAÎNER AU MOINS UN CYLINDRE DE TRAVAIL

(30) Priorität: 19.09.2013 DE 102013218789; 24.10.2013 DE 102013221627
(43) Veröffentlichungstag der Anmeldung: 27.07.2016
(73) Patentinhaber: Voith Patent GmbH, 89522 Heidenheim (DE)
(72) Erfinder: GRAWENHOF, Peter, 89547 Dettingen (DE); MAIER, Dieter, 89537 Giengen (DE); STOCKER, Jürgen, 73466 Lauchheim (DE); BECKER, Markus Klaus, 52066 Aachen (DE)
(86) Internationale Anmeldenummer: PCT/EP2014/069871
(87) Internationale Veröffentlichungsnummer: WO 2015/040102

(56) Entgegenhaltungen:
- EP-A1- 0 728 538
- FR-A- 1 336 605
- GB-A- 741 408
- US-A- 3 408 829

## Beschreibung

Die Erfindung betrifft eine drehfeste Welle-Nabe-Verbindung, insbesondere Walzenzapfen-Trefferverbindung für den Einsatz in Walzwerken, wobei zumindest ein Teilbereich einer um eine in Längsrichtung verlaufende Rotationsachse rotierbaren Welle mit einer Nabe unter Ausbildung eines Verbindungsbereiches mit einer Spielpassung formschlüssig ineinandergreifend zueinander angeordnet sind und zwischen der Welle und der Nabe eine Einrichtung zur flächigen Lasteinleitung vorgesehen ist. Die Erfindung betrifft ferner eine Nabe in Form eines Zapfenaufnehmers und eine Antriebsanordnung für ein Walzwerk zum Antrieb zumindest einer Arbeitswalze. Eine Welle- Nabe- Verbindung bzw. ein Zapfenaufnehmer gemäss dem Oberbegriff der Ansprüche 1 bzw. 9 ist aus Dokument US 3 408 829 A bekannt.

Drehfeste, formschlüssige schnell lösbare Verbindungen zwischen antreibenden und angetriebenen Bauteilen, insbesondere zwischen einem Walzenzapfen einer Arbeitswalze und dem auf diesen aufgesetzten Treffer für den Einsatz in Walzwerken sind in einer Vielzahl von Ausführungen aus dem Stand der Technik bekannt. Unter einem Treffer wird dabei eine Verbindungseinheit zwischen einer Gelenkwelle und einem Walzenzapfen verstanden, wobei dieser weitere Funktionen zuordenbar sind. Stellvertretend wird hier beispielhaft auf Ausführungen aus den Druckschriften DE 950 782, DE 197 10 554 A1 und DE 197 10 552 A1 verwiesen. Bei diesen Ausführungen erfolgt die Übertragung eines anstehenden Drehmomentes durch Formschluss zwischen Mitnahmeflächen am Walzenzapfen und dem jeweiligen Anschlusselement in Form eines Treffers. Die Arbeitswalze ist wenigstens mittelbar mit einer Antriebsmaschine über eine Gelenkwelle gekoppelt. Da in Walzwerken die Walzen regelmäßig nachgeschliffen werden müssen, ist zwischen der jeweiligen Arbeitswalze und der Gelenkwelle eine Anschlusstechnik erforderlich, die zum einen ein schnelles Verbinden und Lösen ermöglicht und verschleißarm ist. Bei herkömmlichen derartigen Verbindungen sieht eine übliche Ausbildung nach dem Stand der Technik vor, die Nabe und einen zuordenbaren Walzenzapfen als Teil einer formschlüssigen Kupplung mit ineinandergreifenden Kupplungspassflächen sowie mit zusätzlich einlegbaren Verschleißplatten mit Passungsspiel auszubilden. Die Drehmomentübertragung erfolgt über den mit der Nabe formschlüssig verbundenen Flachzapfen. Das vorhandene Passungsspiel ist zwar für die Montage vorteilhaft, bedingt jedoch andererseits ein ungleichförmiges Drehmoment im Walzbetrieb und dadurch starken Verschleiß der Treffernabe und Verschleißplatten sowie dynamische Belastungsspitzen am Antriebsaggregat, die auch die Qualität des Walzgutes beeinträchtigen können.

Zur Lösung wird in DE 197 10 554 A1 vorgeschlagen, zur Herstellung eines spielfreien Formschlusses zwischen den Passflächen in einem zwischen diesen ausgebildeten keilförmigen Aufnahmespalt federbelastete Keilplatten einzulegen. Die federbelasteten Keilplatten werden dabei beim Einfahren der Walze axial und zugleich durch ihre Keilform radial verschoben und klemmen so den Walzenzapfen gegen seine Anlagefläche am Treffer. Hierbei kann die Drehmomentübertragung formschlüssig, jedoch spielfrei, über den Flachzapfen erfolgen.

Diese Ausführung setzt eine entsprechende Ausbildung der Verschleißplatten voraus, wobei die Spielfreiheit durch die entsprechende Auslegung der Verschleißplatten sowie die Positionierung in Axialrichtung zwischen Flachzapfen und Treffer eingestellt wird. Die Ausführung ist jedoch relativ aufwendig und eine Nachstellung bei Verschleiß ist nicht oder nur bedingt möglich.

Aus der JP 08226451 A ist eine Ausführung bekannt, bei welcher ein Walzenzapfen in einer Nabe zur Realisierung einer Welle-Nabe-Verbindung aufgenommen ist, wobei zwischen Walzenzapfen und Nabe ein elastisches Zwischenelement angeordnet ist, welches den Walzenzapfen in Umfangsrichtung vollständig unter Spiel umschließend ausgebildet ist, um bei Drehmomentübertragung eine Spielfreiheit zwischen Welle und Nabe zu gewährleisten. Nachteil dieser Ausführung sind der Materialbedarf, bei nachgiebigen Material eine starke Relativbewegung der zu verbindenden Teile zueinander, ggf. ein Fließen des Zwischenelementes sowie die Auslegung zur Gewährleistung der Funktion auch bei eintretendem Verschleiß an diesem.

Aus der EP 0 728 538 A1 ist eine Wellen-Naben Verbindung bekannt, bei der die Kraft zum Halten der Drehwelle durch die Wirkung einer Hydraulikeirichtung erhöht wird. Die Drehwelle hat eine äußere Umfangsfläche, die ein Paar von flachen Oberflächen enthält, die einander entgegengesetzt angeordnet sind, sowie ein Paar gekrümmter Überflächen, die einander entgegengesetzt sind. Die in der Nabe integrierte Hydraulikeinrichtung umfasst 4 Zylinder, wobei jeder Umfangsfläche jeweils ein Zylinder zugeordnet ist. Es sind jeweils zwei Zylinder miteinander gekoppelt/verbunden, die aneinander angrenzenden Oberflächen zugeordnet sind. Wird ein an der Flachseite angeordneter Zylinder von der Welle mit Kraft beaufschlagt, so wird dadurch an der gekrümmten Umfangsfläche die Klemmkraft erhöht. Eine leichte Montage der Welle wird durch ein vorgesehenes Spiel von 0,3-0,5 mm ermöglicht.

Aus der US 3,408,829 ist eine Wellen Naben Verbindung mit einer mit Zähnen versehenen Nabe, wobei die Ausformung komplementär u der Form der Nabe ist. Die Zähne können aus insbesondere aus einem langkettigem Polyamid bestehen.

Aus der FR 1336605 ist eine Wellen-Nabenverbindung bekannt, bei der der Wellenzapfen mit austauschbaren Puffern aus einem Plastik versehen ist. Die Oberfläche der Puffer ist der Nabenoberfläche zugewandt angeordnet.

Aus der GB 741,408 ist es bekannt die Nabe eine Wellen-Nabenverbindung zur Geräuschdämpfung mit Puffern, z.B. aus Holz oder Gummi, zu sehen. Die weiche Oberfläche der Puffer ist jeweils der Welle zugewandt.

Der Erfindung lag daher die Aufgabe zugrunde, eine Verbindungstechnik für eine formschlüssige Verbindung zu schaffen, die einerseits die Auslegung der Bauteile und Positionierung bei Montage mit Spiel erlaubt und ferner während des Betriebes immer eine flächige Kraftübertragung gewährleistet. Die Verbindungstechnik soll insbesondere den Anforderungen an den Einsatz in Walzwerken gerecht werden und ein einfaches und schnelles Verbinden und Lösen des Antriebsstranges erlauben. Des Weiteren soll der Prozess des Verbindens beziehungsweise Lösens sehr robust und wenig störanfällig sein, sodass zusätzliche Stillstandszeiten der Anlage auf ein Minimum reduziert werden. Die Zunahme von dynamischen Effekten in Form von Drehmomentspitzen soll dadurch vermieden werden, so dass durch den reduzierten Verschleiß das Betriebsspiel nahezu konstant bleibt.

Die erfindungsgemäße Lösung wird durch die in den Ansprüchen 1 bzw. 9 angegebenen Merkmalskombinationen erreicht. Vorteilhafte Ausgestaltungen sind in den Unteransprüchen wiedergegeben.

Eine drehfeste Welle-Nabe-Verbindung, insbesondere Walzenzapfen-Treffer-Verbindung für den Einsatz in Walzwerken, wobei zumindest ein Teilbereich einer um eine in Längsrichtung verlaufende Rotationsachse rotierbaren Welle mit einer Nabe unter Ausbildung eines Verbindungsbereiches mit einer Spielpassung formschlüssig ineinandergreifend zueinander angeordnet sind und zwischen der Welle und der Nabe eine Einrichtung zur flächigen Lasteinleitung vorgesehen ist, wobei die Einrichtung zumindest ein Ausgleichelement umfasst, welches zumindest bei Drehmomentübertragung jeweils die Welle und die Nabe flächig berührt, ist erfindungsgemäß dadurch gekennzeichnet, dass das einzelne Ausgleichelement wenigstens einen verformbaren, weitestgehend inkompressiblen Bereich aufweist und in Aussparungen, die an der Nabe und/oder an der Welle vorgesehen sind, eingelegt oder eingepresst ist. Vorzugsweise ist der Bereich vollständig inkompressibel.

Das Einpressen erfolgt vorzugsweise mit einer Presspassung zwischen einem Teilbereich des Ausgleichelementes und der Ausnehmung, wobei der übrige Teil mit Spiel gegenüber der Ausnehmung und/oder der Welle ausgeführt sein kann. Das Einlegen erfolgt mit einer Übergangs- oder Spielpassung gegenüber der Ausnehmung. In Abhängigkeit des dadurch zur Verfügung gestellten Raumes kann das Ausgleichelement sich unter Krafteinwirkung unter Volumenbeibehaltung verformen und wieder rückstellen.

In einer Ausführungsform ist vorgesehen, dass das einzelne Ausgleichelement sich in Längsrichtung der Rotationsachse zumindest über einen Teilbereich des Verbindungsbereiches oder über den gesamten Verbindungsbereich erstreckend ausgeführt ist.

In weiteren Ausführungsformen kann vorgesehen sein, dass
eine Mehrzahl von Ausgleichelementen (14) vorgesehen ist, die
- jeweils in den in Richtung der Rotationsachse (R) betrachtet liegenden Endbereichen des Verbindungsbereiches (20) und/oder
- über zumindest einen Teilbereich des Verbindungsbereiches (20) in Längsrichtung der Rotationsachse (R) betrachtet beabstandet zueinander angeordnet sind, wobei die Anordnung einzeln oder gekoppelt über ein die Ausgleichelemente (14) verbindendes Trägerelement erfolgt.

Weitestgehend inkompressibel im Sinne der Erfindung bedeutet dabei, dass das Ausgleichelement derart ausgeführt ist, dass es sich unter Krafteinwirkung wie ein inkompressibles Fluid verhält, d.h. sich unter Volumenbeibehaltung verformt. Abweichungen im Bereich bis 15%, d.h. insbesondere eine Volumenreduzierung unter Krafteinwirkung bis auf 85% des Ursprungsvolumens sind denkbar und sollen mit umfasst sein. Weitestgehend inkompressibel im Sinne der Erfindung bedeutet desweiteren insbesondere, dass die Querkontraktionszahl des Materials des Ausgleichelementes im Bereich von My = 0,3 bis 0,5, besonders bevorzugt etwa 0,5 ausgebildet ist.

In einer bevorzugten Ausführungsform der Erfindung ist vorgesehen, das einzelne Ausgleichelement zumindest teilweise aus zumindest einem Material oder einer Materialkombination aus der nachfolgenden Gruppe ausgeführt ist:
- Elastomer
- Kunststoff
- Faserverbundwerkstoff
- Hybrid aus einem Metall und einem der vorgenannten Materialien
- ein gekapseltes Fluid, insbesondere Flüssigkeit.

In einer bevorzugten Ausführungsform ist vorgesehen, dass das einzelne Ausgleichelement zumindest eine mit einem inkompressiblen Fluid befüllbare Kammer umfasst, wobei die die Kammer umschließenden Wandbereiche zumindest teilweise elastisch verformbar sind.

In einer weiteren Ausführungsvariante ist vorgesehen, dass jeweils zwei diagonal zur durch die Rotationsachse der Welle und einer Senkrechten zu dieser beschreibbaren Mittenebene angeordnete Ausgleichelemente miteinander hydraulisch gekoppelt sind.

Die erfindungsgemäße Lösung ermöglicht auf einfache Art und Weise eine Spielfreiheit formschlüssiger Welle-Nabe-Verbindungen frei von einem Einsatz von zwischengeordneten Verschleißbauteilen als Opferbauteil. Eine Linienberührung der miteinander zu verbindenden Bauteile wird aufgrund des flächigen Anliegens der Ausgleichelemente an den miteinander zu verbindenden Bauteilen mit Sicherheit vermieden, so dass die Kraftübertragung flächig erfolgt.

Die Anordnung der Ausgleichelemente in dafür vorgesehenen Aussparungen an der Nabe und/oder der Welle bietet den Vorteil einer einfachen Lagefixierung der Ausgleichelemente in Umfangsrichtung der Welle bzw. der Nabe frei von zusätzlichen Befestigungselementen. Durch die Anordnung in Aussparungen kann die Welle mit maximalem Querschnitt bezogen auf die durch die aufnehmende Öffnung an der Nabe beschreibbare Querschnittsfläche unter Berücksichtigung des zur Montage erforderlichen Spiels ausgeführt werden. Die Ausgleichelemente selbst können hinsichtlich ihrer Auslegung sehr schmal gehalten werden und können hinsichtlich ihrer Lage auf die belasteten kraftübertragenden Bereiche beschränkt sein.

Das einzelne Ausgleichelement wird vorzugsweise in den an der Nabe und/oder an der Welle vorgesehenen Aussparungen in einer ersten Richtung senkrecht zur Längsrichtung betrachtet zwischen Welle und Nabe frei von Spiel gegenüber Welle und Nabe und mit Spiel innerhalb der Aussparung in der Welle und/oder Nabe in einer zweiten Richtung senkrecht zur ersten Richtung betrachtet eingelegt oder eingepresst. Die Ausgleichelemente selbst sind somit insbesondere in der ersten Richtung vorzugsweise kraftschlüssig mit der Nabe gekoppelt.

Das Spiel zwischen Ausgleichelement und der Aussparung in der zweiten Richtung kann über einen Spalt zwischen Ausgleichelement und dem jeweiligen die Aussparung aufweisenden Element - Welle und/oder Nabe als Funktion zumindest einer Größe oder einer Kombination aus der nachfolgend genannten Gruppe von Größen eingestellt werden:
- Shore-Härte des Materials des Ausgleichelementes oder des zumindest weitestgehend inkompressibelen Bereiches des Ausgleichelementes
- Spaltweite in der zweiten Richtung
- Spaltlänge in der ersten Richtung.

Dabei wird insbesondere eine Flexibilität hinsichtlich der Materialwahl des inkompressiblen Bereiches am Ausgleichelement über die Wahl des Verhältnisses von Spaltlänge zu Spaltbreite eingestellt. Das Verhältnis beträgt zumindest 1:1, vorzugsweise >5:1, besonders bevorzugt > 10:1. Im letztgenannten Fall können Werkstoffe mit sehr geringerer Shore-Härte zum Einsatz gelangen.

In besonders vorteilhafter Ausbildung ist die drehfeste Verbindung als Walzenzapfen-Treffer-Verbindung ausgeführt und gelangt als diese zur Realisierung von Verbindungen einer Arbeitswalze mit einem Treffer in Walzwerksantrieben zum Einsatz. Das Vorsehen zumindest eines, zumindest einen elastischen Bereich aufweisenden und damit zumindest teilweise elastischen Ausgleichelementes zwischen dem Walzenzapfen und der Treffernabe selbst ermöglicht dabei eine Ausrichtung der Bauteile zueinander im Betrieb und eine flächige Kraftübertragung. Das Ausgleichselement bietet ferner den Vorteil, dass dieses in Abhängigkeit der Ausbildung auch bei Verschleiß noch einen flächigen Kontakt bereitstellt. Weiterhin wird durch eine geeignete Materialwahl, einhergehend mit metallischer Trennung der Verschleiß an der Treffernabe nahezu vermieden.

Bezüglich der konkreten Ausgestaltung des einzelnen Ausgleichelementes besteht eine Mehrzahl von Möglichkeiten, die für sich allein oder in Kombination miteinander zum Einsatz gelangen können.

In Längsrichtung der Rotationsachse betrachtet ist das einzelne Ausgleichelement sich über zumindest einen Teilbereich des Verbindungsbereiches erstreckend oder über den gesamten Verbindungsbereich erstreckend ausgeführt. Im erst genannten Fall ist eine Mehrzahl an Ausgleichelementen vorgesehen, die hintereinander oder beabstandet zueinander in Längsrichtung der Rotationsachse im Verbindungsbereich positioniert sind. Die Anordnung der einzelnen Ausgleichelemente und deren Auslegung bestimmt dabei die Größe der Kraftübertragungsflächen. In bevorzugter Ausführung ist in Längsrichtung betrachtet zumindest in den in Richtung der Rotationsachse betrachtet liegenden Endbereichen des Verbindungsbereiches jeweils ein einzelnes Ausgleichelement angeordnet. Diese Lösung bietet bei sehr großen Verbindungsbereichen den Vorteil der Materialersparnis bei gleichzeitiger Gewährleistung der Abstützung in den Hauptlastbereichen.

Die einzelnen Ausgleichelemente können als separate Elemente vorliegen oder aber miteinander über Verbindungselemente, beispielsweise über ein sich über einen Teilbereich des Verbindungsbereiches erstreckendes Trägerelement miteinander gekoppelt sein. Die Kopplung bietet den Vorteil eines einfacheren Handlings und Vereinfachung der Bearbeitung der miteinander zu verbindenden Bauteile bei Positionierung in an diesen dafür vorgesehenen Aussparungen. Bei Vorsehen mehrerer einzelner Ausgleichelemente und Positionierung in Aufnahmebereichen an der Welle und/oder Nabe ist die Anordnung der Aufnahmebereiche örtlich begrenzt, d.h. es besteht nur eine lokale begrenzte Schwächung an den jeweiligen Bauteilen.

In einer besonders vorteilhaften Ausbildung ist das einzelnen Ausgleichelement als Leiste ausgebildet, umfassend einen leistenförmigen Träger und ein sich über den gesamten Träger, insbesondere den Träger in Längsrichtung oder eine Mehrzahl von sich über einen Teilbereich des Trägers erstreckende Verformungselemente aus verformbaren, inkompressibles Material. Denkbar sind hier Ausführungen mit Trägern aus Stahl oder einem anderen metallischen Werkstoff, der mit Gummi beschichtet ist. Dabei wird bei Anordnungen zur Verbindung eines Zapfenaufnehmers mit einer Walze der Träger vorzugsweise der Walze bzw. dem Walzenzapfen zugeordnet, während die Verformungselemente mit der Nabe in Berührung gelangen. Dadurch kann die Nabe aus weicherem Material hergestellt werden.

In besonders vorteilhafter Ausbildung sind die Aussparungen zur Aufnahme der Ausgleichelemente nur an der Nabe vorgesehen, so dass bei eingepresstem Ausgleichelement die Nabe mit diesem als vormontierte Baueinheit bereitgestellt werden kann.

Die Aussparungen sind je nach Ausführung und Anordnung der Ausgleichelemente als sich in Längsrichtung über den Verbindungsbereich erstreckende Nuten oder einzelne randoffene Öffnungen ausgeführt. In besonders vorteilhafter Weiterbildung weist die einzelne Aussparung zumindest einen in radialer Richtung und/oder Längsrichtung wirksamen Hinterschnitt auf. Dies erleichtert die Montage und verhindert unabhängig von der Art der Passung zwischen Nabe und Ausgleichelement und der Lage der Nabe (z.B. Überkopfanordnung der Ausgleichelemente) ein ungewünschtes Herausgleiten der Ausgleichelemente.

Die Welle weist vorzugsweise zur Verbindung einen koaxialen Walzenzapfen in nicht rotationssymmetrischer Ausführung auf, welcher jedoch bezüglich einer durch die Rotationsachse der Welle und einer Senkrechten zu dieser beschreibbaren Mittenebene symmetrisch ausgeführt ist. In besonders vorteilhafter Weiterbildung ist der Walzenzapfen als Flachzapfen ausgeführt, umfassend zwei ebene und parallel zueinander angeordnete Flachzapfenseiten, die über einen gerundeten Übergangsbereich miteinander verbunden sind. Andere Ausführungen, beispielsweise in Dreiecksform oder Kleeblattform sind ebenfalls denkbar.

Die Anordnung eines einzelnen Ausgleichelementes erfolgt gemäß zumindest einer der Anordnungen aus der nachfolgenden Gruppe oder einer Kombination aus diesen:
a) im Bereich der Mittenebene und/oder
b) von der Mittenebene beabstandet.

Für alle Anordnungen gelten auch die Aussagen bezüglich der Anordnung in Längsrichtung der Rotationsachse.

Bei Ausbildung als Flachzapfen kann der Spielausgleich durch Anordnung eines einzelnen im Bereich der Mittenebene angeordneten und sich quer zur Rotationsachse betrachtet beidseitig über diese Mittenebene hinaus erstreckendes Ausgleichelement erfolgen, wobei die Anordnung zwischen einer Flachzapfenseite und der Nabe erfolgt. In diesem Fall wird die gegenüberliegend und sich nicht über das Ausgleichelement an der Nabe abstützende Flachzapfenseite direkt an der Nabe anliegen und somit einen größtmöglichen Flächenkontakt bereitstellen.

Vorzugsweise sind jedoch beidseitig der Welle, insbesondere zwischen beiden Flachzapfenseiten eines Flachzapfens und der Nabe entsprechende Ausgleichelemente vorgesehen.

In einer Weiterbildung sind immer zumindest zwei Ausgleichelemente vorgesehen, die entweder symmetrisch bezogen auf die Mittenebene oder paarweise diagonal zur Mittenebene zwischen Welle und Nabe angeordnet sind, wobei die Anordnung derart erfolgt, dass diese zumindest in einer Drehrichtung wirksam sind.

In besonders vorteilhafter Weiterentwicklung vorgenannter Weiterbildung ist immer eine Mehrzahl von Ausgleichelementen vorgesehen, die beabstandet zur Mittenebene und diagonal angeordnet sind. Diese Anordnung ist drehrichtungsunabhängig zur Erzielung einer flächigen Lasteinleitung einsetzbar.

Das einzelne Ausgleichelement ist derart ausgebildet und angeordnet, dass eine Formänderung (Änderung der Kontur, Geometrie) frei von einer Volumenänderung ist. Diese Eigenschaft ist im Wesentlichen abhängig von der Querkontraktionszahl des Werkstoffs. Der theoretische Grenzfall "Keine Volumenänderung bei Druckbeaufschlagung" wird erreicht bei einem Stoff mit einer Querkontraktionszahl von My = 0,5. Geringere Werte sind denkbar, wobei mit abnehmendem My jedoch die zunehmende Kompressibilität des Werkstoffes zu berücksichtigen ist. Für die erfindungsgemäße Lösung finden daher vorzugsweise Materialien Verwendung, die durch eine Querkontraktionszahl im Bereich von ungefähr My = 0,3 bis 0,5 besonders bevorzugt 0,5 liegen.

Das einzelne Ausgleichelement ist zumindest teilweise aus zumindest einem Material oder einer Materialkombination aus der nachfolgenden Gruppe ausgeführt:
- Elastomer
- Kunststoff
- Faserverbundwerkstoff
- Hybrid aus einem Metall und einem der vorgenannten Materialien
- gekapseltes Fluid, insbesondere Flüssigkeit

Das einzelne Ausgleichelement kann hinsichtlich seiner geometrischen Form vielgestaltig ausgebildet sein. Entscheidend ist, dass dieses auch im Nichtbetrieb ein flächiges Anliegen an den Mitnahmeflächen an Welle und Nabe ermöglicht. Der zumindest elastische Bereich kann als Funktion zumindest einer Größe oder einer Kombination aus der nachfolgend genannten Gruppe von Größen definiert und festgelegt werden:
- des Materials
- der Geometrie des Ausgleichelementes in Längsrichtung in Einbaulage
- der Geometrie des Ausgleichelementes quer zur Längsrichtung in Einbaulage

Durch die geeignete Materialwahl kann bereits das gewünschte elastische Verhalten eingestellt werden.

Die Realisierung des elastischen Verhaltens durch die geometrische Gestaltung erlaubt sehr komplexe Geometrien und die Verwendung von einfachen Profilbauteilen. Vorzugsweise werden zur Bereitstellung einfach gestalteter Ausgleichelemente beide Möglichkeiten kombiniert.

In einer besonders vorteilhaften Ausgestaltung umfasst das einzelne Ausgleichelement zumindest eine mit einem inkompressiblen Fluid befüllbare Kammer, wobei die die Kammer umschließenden Wandbereiche zumindest teilweise elastisch verformbar sind. Auch hier wird die Elastizität der Wandbereiche entweder über die Materialwahl oder die Geometrie allein oder eine Kombination aus beiden erzeugt.

Die Befüllung der Kammer kann einmalig bei der Montage des Ausgleichelementes in der Treffernabe oder aber beim Walzenwechsel erfolgen. Ist eine Befüllung bei der Montage möglich, kann das Einfahren des Walzenzapfens in die Nabe mit einem vergrößerten Spiel vorgenommen werden. Gemäß einer besonders vorteilhaften Weiterbildung kann über die hydraulisch beaufschlagbaren Ausgleichelemente auch eine aktive Nachstellung während des Betriebes erfolgen. In diesem Fall ist es beispielsweise denkbar, bei Erfassung zumindest einer, eine Linienberührung zwischen Welle und Nabe wenigstens mittelbar charakterisierenden Größe die Kammern mit Druckmittel zu beaufschlagen, derart, dass eine Verformung der elastischen Wandbereiche erzielt wird, die ein flächiges Anliegen des Ausgleichelementes sowohl an der Welle als auch an der Nabe ermöglicht.

Eine besonders vorteilhafte Ausbildung ist durch Ausgleichelemente mit hydraulisch beaufschlagbaren Kammern gegeben, wobei die einer Drehrichtung zugeordneten, einander diagonal, vorzugsweise gegenüberliegenden Ausgleichelemente miteinander hydraulisch gekoppelt sind. In diesem Fall erfolgt eine Beaufschlagung mit Fluid bis zu einem Mindestmaß, welches bei Druckbeaufschlagung des Ausgleichelementes unter Drehmomentbelastung eine Verdrängung des Fluides aus der einen Kammer in die andere, diagonal gegenüberliegende Kammer ermöglicht, und somit an den einander gegenüberliegenden Mitnahmeflächen an der Walze beziehungsweise dem Walzenzapfen immer eine gleichmäßige Abstützung unter Lasteinwirkung erfolgt. Andere Ausführungen sind denkbar.

Die erfindungsgemäße Welle-Nabe-Verbindung ist besonders für den Einsatz in Walzwerken geeignet, insbesondere zur Verbindung einer Arbeitswalze mit der Gelenkwelle über einen Treffer. Die Welle wird dabei von einer Arbeitswalze gebildet und die Nabe von einem Treffer.

Der die Nabe bildende Zapfenaufnehmer einer Gelenkspindel, insbesondere Treffer dient zur Aufnahme eines Zapfens eines Anschlussaggregates, insbesondere Walze zur Realisierung einer drehfesten Welle-Nabe-Verbindung für den Einsatz in Walzwerken. Dieser weist eine in Längsrichtung verlaufenden Öffnung zur Aufnahme eines Walzenzapfens einer um eine Rotationsachse rotierbaren Welle, insbesondere eines Walzenzapfens einer Arbeitswalze auf und ist dadurch gekennzeichnet, dass an der durch die Öffnung beschreibbaren Innenumfangsfläche zumindest eine Aussparung zur form- und/oder kraftschlüssigen Aufnahme eines Ausgleichelementes einer Einrichtung zur flächigen Lasteinleitung vorgesehen ist, wobei das Ausgleichelement eine Oberfläche aufweist, die zumindest zeitweise flächig am von der Aussparung gebildeten Teilbereich der Innenumfangsfläche anliegt. Der Zapfenaufnehmer mit Ausgleichelement/-elementen kann als eigenständiges Bauteil vormontiert und vertrieben werden.

Bezüglich vorteilhafter Ausbildungen des Zapfenaufnehmers wird auf die vorherigen Ausführungen zur Nabe der drehfesten Welle-Nabe-Verbindung mit in Aussparungen an der Nabe aufgenommenen Ausgleichelementen verwiesen. Bezüglich vorteilhafter Ausbildungen der Ausgleichelemente wird auf die vorherigen Ausführungen zu den Ausgleichelementen der drehfesten Welle-Nabe-Verbindung verwiesen.

Eine Antriebsanordnung für ein Walzwerk zum Antrieb zumindest einer Arbeitswalze, welche über eine Gelenkwelle mit einer Antriebsmaschine wenigstens mittelbar, d.h. direkt oder indirekt über weitere Übertragungselemente gekoppelt ist, wobei zwischen Gelenkwelle und Arbeitswalze eine Verbindungseinrichtung in Form eines Treffers vorgesehen ist, ist dadurch gekennzeichnet, dass die drehfeste Verbindung zwischen dem Treffer und der Arbeitswalze als Welle-Nabe-Verbindung gemäß einem der Ansprüche 1 bis 15 ausgeführt ist.

Die erfindungsgemäße Lösung wird nachfolgend anhand von Figuren erläutert. Darin ist im Einzelnen Folgendes dargestellt:
- Figur 1: zeigt beispielhaft einen Antriebsstrang für ein Walzwerk mit einer erfindungsgemäß ausgeführten Welle-Nabe-Verbindung;
- Figur 2a: zeigt beispielhaft eine erfindungsgemäß ausgebildete Nabe in Form eines Treffers in einer durch die Rotationsachse und einer Senkrechten zu dieser beschreibbaren Ebene;
- Figur 2b: zeigt einen Endbereich einer Arbeitswalze;
- Figur 3: zeigt anhand einer Schnittdarstellung senkrecht zur Axialebene die Problematik einer formschlüssigen spielbehafteten Welle-Nabe-Verbindung gemäß dem Stand der Technik;
- Figur 4a: zeigt beispielhaft eine erste mögliche Anordnung der Ausgleichelemente zwischen Flachzapfen und Treffer;

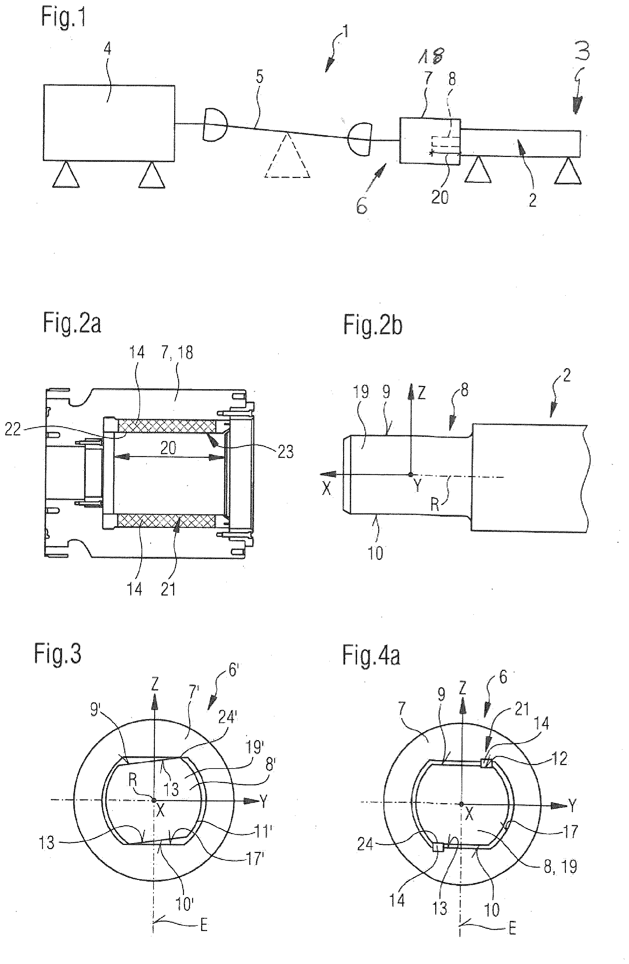

- Figur 4a: zeigt beispielhaft eine zweite mögliche und drehrichtungsunabhängige Anordnung der Ausgleichelemente zwischen Flachzapfen und Treffer;

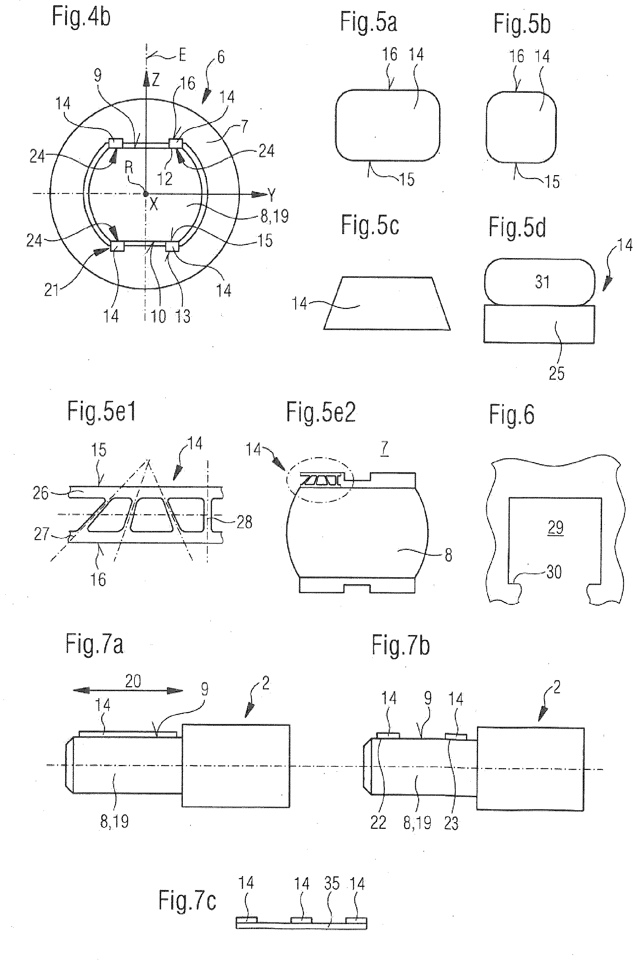

- Figuren 5a bis 5d: zeigen im Querschnitt betrachtet beispielhaft mögliche geometrische Ausbildungen der Ausgleichelemente;
- Figur 6: zeigt beispielhaft im Detail eine Ausnehmung an einer Nabe mit Hinterschneidung;
- Figuren 7a bis 7c: zeigen beispielhaft mögliche Anordnungen der Ausgleichelemente im Verbindungsbereich in Längsrichtung der Rotationsachse betrachtet ohne Darstellung der Nabe:

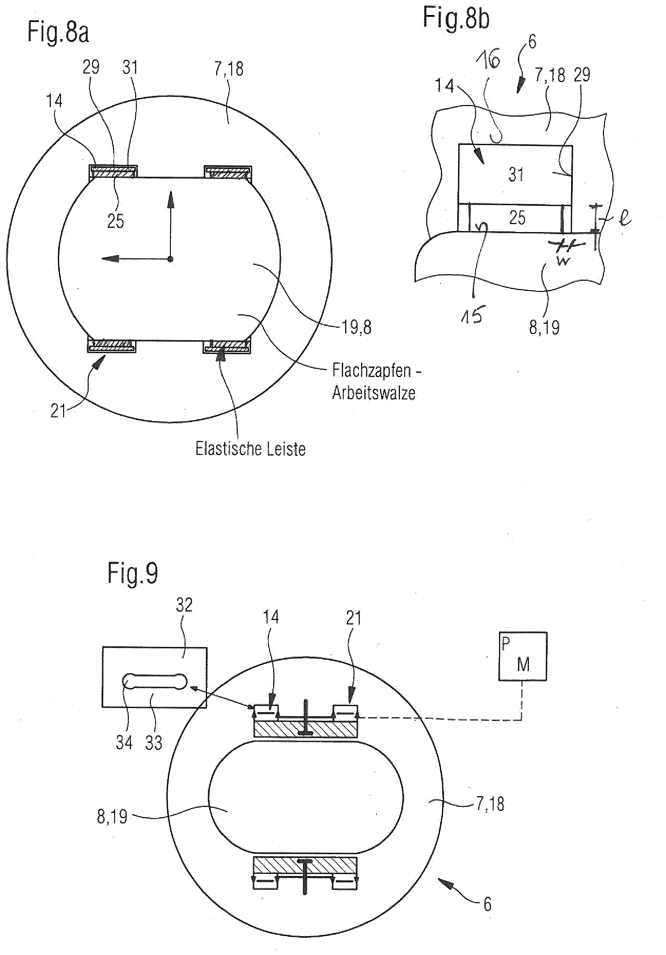

- Figuren 8a und 8b: zeigen eine besonders vorteilhafte Anordnung und Ausbildung von Ausgleichelementen der Einrichtung zum Ausgleich des Spiels;
- Figur 9: verdeutlicht eine Ausführung der Welle-Nabe-Verbindung mit hydraulisch beaufschlagbaren Ausgleichelementen.

Die Figur 1 verdeutlicht in schematisiert vereinfachter Darstellung den Aufbau eines Antriebsstranges 1 zum Antrieb zumindest einer um eine Rotationsachse R rotierbaren Welle, insbesondere einer Walze 2, welche in Form einer Arbeitswalze in besonders vorteilhafter Anwendung in einem Walzwerk 3 zum Einsatz gelangt. Der Antriebsstrang 1 umfasst zumindest eine Antriebsmaschine 4, welche zum Ausgleich von Lageungenauigkeiten über eine Gelenkwelle 5 in Form einer sogenannten Schwergelenkwelle wenigstens mittelbar mit der Walze 2 verbunden ist. Die Verbindung erfolgt über eine erfindungsgemäß ausgeführte Welle-Nabe-Verbindung 6. Die Nabe 7 kann am Gelenkwellenflansch selbst ausgebildet sein oder von einem separaten, mit der Gelenkwelle 5 drehfest gekoppelten, insbesondere verbundenen Bauteil, welches als Nabe 7 fungiert und beim Einsatz in Walzwerken auch als Zapfenaufnehmer bzw. Treffer 18 bezeichnet wird, gebildet werden.

Die Verbindung mit der Walze 2 erfolgt über eine entsprechende Welle-Nabe-Verbindung 6, ausgebildet zwischen einem Treffer 18 und einem Wellenzapfen 8 der Arbeitswalze 2. Die Welle-Nabe-Verbindung 6 ist als formschlüssige Verbindung ausgeführt. Die miteinander zu verbindenden Bauteile sind in den Figuren 2a und 2b wiedergegeben. Figur 2a zeigt in einem Axialschnitt eine Nabe 7 in Form des Treffers 18. Die Figur 2b zeigt einen Ausschnitt aus dem Endbereich einer Walze 2, insbesondere den Walzenzapfen 8, welcher in Form eines Flachzapfens 19 vorliegt. Der Flachzapfen 19 ist koaxial zur Rotationsachse R angeordnet und durch zwei zueinander parallel angeordnete und einander gegenüberliegende Flachzapfenseiten 9, 10 charakterisiert, welche über gerundet ausgeführte Übergangsbereiche miteinander verbunden sind und den Außenumfang des Flachzapfens 19 bilden. Die Flachzapfenseiten 9, 10 beschreiben ebene Flächenbereiche. Die den Zapfen 8 aufnehmende Nabe 7 wird auch als Zapfenaufnehmer bezeichnet.

Bei allen dargestellten Ausführungen wird zur Erläuterung ein Koordinatensystem an die konkrete Verbindung angelegt. Die x-Richtung beschreibt dabei die Erstreckung in Richtung der Rotationsachse R und damit die Axialrichtung. Die y-Richtung beschreibt die Erstreckung an einer Horizontalebene zur x-Richtung in einem Winkel von 90° zu dieser. Die z-Richtung beschreibt die Erstreckung in Höhenrichtung. Unter Axialebene wird dabei eine Ebene verstanden, die durch die Rotationsachse R und einer Senkrechten zu dieser in Höhenrichtung charakterisiert ist. Die Mittenebene entspricht dabei der Axialebene, in der auch die Rotationsachse R angeordnet ist.

Zur Realisierung der drehfesten Welle-Nabe-Verbindung 6 wird die um eine in Längsrichtung verlaufende Rotationsachse R rotierbare Welle, hier die Walze 2 mit der Nabe 7 unter Ausbildung eines Verbindungsbereiches 20 mit einer Spielpassung formschlüssig ineinandergreifend zueinander angeordnet. Die Nabe 7 in Form des Treffers 18 weist eine Öffnung 11 auf, in welche der Wellenzapfen 8 eingeschoben wird beziehungsweise mittels der die Nabe 7 auf den Wellenzapfen 8 aufgeschoben wird. Durch das bei Montage benötigte Spiel ist diese Verbindung bei Ausführung gemäß dem Stand der Technik sehr starkem Verschleiß unterworfen. Während des Betriebes bildet sich eine Kontaktfläche mit Tendenz zur Linienberührung entsprechend einer schematisiert vereinfachten Darstellung in Figur 3 aus, welche eine Welle-Nabe Verbindung 6' gemäß dem Stand der Technik in einer Schnittebene senkrecht zur Axialebene wiedergibt.

Erkennbar ist hier, dass die einzelnen Flachzapfenseiten 9' und 10' jeweils mit den zueinander bezogen auf die Rotationsachse R und eine durch diese und eine Senkrechte zu dieser beschreibbaren Mittelebene E diagonal gegenüberliegenden Enden 24' an Flächenbereichen 13' am Innenumfang 17' der Nabe 7' zum Anliegen gelangen, wobei die Drehmomentübertragung über einen Linienkontakt oder sehr kleine Flächenbereiche erfolgt. Diese Linienberührung, insbesondere Kantenträger bewirken einen sehr hohen Verschleiß am Flachzapfen 19', insbesondere im Bereich der Übergangskanten von den Flachseiten zu den Übergangsbereichen am Flachzapfen und/oder dem Treffer 18' und führen damit zu Ungleichförmigkeiten in der Drehmomentübertragung. Zur Vermeidung dieses Nachteiles wird eine erfindungsgemäß ausgeführte Welle-Nabe-Verbindung 6 vorgeschlagen, welche zwischen der Welle und der Anschlussnabe zumindest eine Einrichtung 21 zur flächigen Lasteinleitung aufweist. Die Einrichtung 21 weist zumindest ein, wenigstens einen elastischen Bereich aufweisendes Ausgleichelement 14 auf, welches zumindest bei Drehmomentübertragung jeweils die Welle, hier den Wellenzapfen 8 in Form des Flachzapfens 19 und die Nabe 7 in Form des Treffers 18 flächig berührt. Das zumindest eine Ausgleichelement 14 ist derart angeordnet und ausgebildet, dass es zwischen dem Walzenzapfen 8 und der Nabe 7 bzw. dem Treffer 18 eine Ausrichtung der Bauteile im Betrieb erlaubt und eine flächige Kraftübertragung ermöglicht. Dabei besteht für die Anordnung und Ausbildung des einzelnen Ausgleichelementes 14 eine Mehrzahl von Möglichkeiten. Es ist jedoch immer derart ausgeführt, dass unter Verformung ein flächiger Kontakt zum einen mit einem Flächenbereich 12 am Walzenzapfen, insbesondere Flachzapfen und 13 an der Treffernabe 7 ausgeführt wird. Das Ausgleichelement 14 weist dazu zumindest einen Bereich auf, der aus einem Material besteht, welches verformbar aber weitestgehend inkompressibel ist, d.h. bei Verformung das Volumen beibehält. Figur 2a verdeutlicht beispielhaft die Anordnung eines derartigen Ausgleichelementes 14 in einem Treffer 18 in einem Axialschnitt. Das Ausgleichelement 14 ist hier als sich über den Verbindungsbereich 20 zwischen den Endbereichen 22 und 23 in Richtung der Rotationsachse R erstreckend ausgeführt. Die Funktionsweise bei Drehmomentübertragung und Anordnung bezogen auf die Mittenebene E sind in Figur 4a in einem Schnitt senkrecht zur Axialebene wiedergegeben. Diese Ausführung ist für formschlüssige Welle-Nabe-Verbindungen 6 mit nur einer Drehrichtung geeignet. Dabei erfolgt die Anordnung an dem Endbereich der Flachzapfenseite 9 beziehungsweise 10, der sich in Drehrichtung auf den Treffer 18, insbesondere Innenumfang 17 zubewegt. Um eine gleichmäßige Abstützung zu gewährleisten, sind zumindest zwei, paarweise diagonal zur Mittenebene E angeordnete Ausgleichelemente 14 vorgesehen, welche jeweils zwischen dem Flachzapfen 19, allerdings unterschiedlichen Flachzapfenseiten 9 und 10 und dem Innenumfang 17 der Nabe 7, insbesondere dem Treffer angeordnet sind.

Die Figur 4b verdeutlicht eine vorteilhafte Weiterbildung mit drehrichtungsunabhängiger Anordnung der Ausgleichelemente 14. Diese sind dazu jeweils paarweise diagonal zur Mittenebene E beziehungsweise symmetrisch bezogen auf die Mittenebene E angeordnet. Die Anordnung erfolgt jeweils in den Endbereichen 24 der Flachzapfenseiten 9 und 10 zum Übergangsbereich quer zur Längsrichtung betrachtet.

Bei allen Ausführungen ist das Ausgleichelement 14 im unbelasteten Zustand derart ausgeführt, dass dieses durch eine erste Anlagefläche 15 und eine zweite Anlagefläche 16 charakterisiert ist, die jeweils mit den Flächenbereichen 12 an den Flachseiten 9 und 10 beziehungsweise 13 am Innenumfang 17 der Nabe 7 zum Anliegen gelangen.

Figuren 5a bis 5d zeigen im Querschnitt betrachtet beispielhaft mögliche geometrische Ausbildungen der Ausgleichelemente 14.

Figur 5a verdeutlicht dabei eine erste Ausbildung bei welcher der zumindest eine verformbare und weitestgehend inkompressible Bereich, insbesondere elastische Bereich des Ausgleichelementes 14 von diesem selbst gebildet wird und die erforderliche Verformbarkeit über die Wahl der für das Ausgleichelement 14 verwendeten Materialien eingestellt ist. Beispielhaft ist das Ausgleichelement 14 als Elastomerkörper oder Kunststoffkörper ausgeführt und in einer Ansicht wiedergegeben. Der Elastomerkörper liegt als Vollprofilelement vor, wobei im dargestellten Fall in Figur 5a ein rechteckiger Querschnitt mit gerundeten Kanten und gemäß Figur 5b ein quadratischer Querschnitt mit gerundeten Kanten vorliegt. Jedes dieser Ausgleichelemente 14 weist in Einbaulage betrachtet zwei einander gegenüberliegende Anlageflächen 15 und 16 auf, die flächig an den miteinander zu verbindenden Bauteilen - Welle und Nabe - zum Anliegen gelangen.

In Analogie zu den Figuren 5a und 5b ist das Ausgleichelement 14 in Figur 5c ausgeführt. Dieses ist als Vollprofilelement mit Trapezquerschnitt ausgebildet.

Figur 5d zeigt beispielhaft ein Verbundteil, wobei bei diesem die Materialeigenschaften und die Formgebung die Elastizität des Gesamtkörpers definieren. Im dargestellten Fall wird der elastische Bereich von einem verformbaren und inkompressiblen Bauteil, insbesondere Elastomerkörper gebildet, welcher mit einem Träger 25 verbunden ist. Der Träger 25 kann beispielsweise aus Metall bestehen. Das den verformbaren, weitestgehend inkompressiblen und damit elastischen Bereich 31 bildende Teil des Verbundteils kann beispielsweise an den Träger 25 anvulkanisiert sein. In besonders vorteilhafter Ausbildung ist der Träger 25 leistenförmig und sich über die Erstreckung des Verbindungsbereiches erstreckend ausgebildet. Das den verformbaren, weitestgehend inkompressiblen und damit elastischen Bereich 31 bildende Teil des Verbundteils erstreckt sich ebenfalls über die gesamte Oberfläche des Trägers 25 in Längsrichtung, vorzugsweise an der in Einbaulage zur Nabe 7 und vom aufzunehmenden Walzenzapfen 8 wegweisenden Seite. Der den verformbaren, inkompressiblen Bereich bildende Materialbereich wird vorzugsweise von einem Elastomer, Gummi oder Kunststoff gebildet.

Figur 5e1 und 5e2 zeigen eine Ausführung mit Ausgleichelementen 14, deren Elastizität über die Geometrie und gegebenenfalls zusätzlich durch die Materialeigenschaften eingestellt ist. Die Figur 5e1 zeigt beispielhaft eine Bauweise, die durch zwei, die Anlageflächen 15 und 16 bildenden flächige Grundelemente 26, 27 und diese miteinander verbindende Verbindungsstege 28 charakterisiert ist. Die Ausrichtung der Verbindungsstege 28 erfolgt hinsichtlich der Krafteinleitung und des gewünschten Verformungsverhaltens optimiert. Die Figur 5e2 zeigt anhand einer in den Figuren 3 und 4 wiedergegeben Schnittansicht die Anordnung eines Ausgleichelementes 14 gemäß Figur 5e1.

Die in den Figuren 5a bis 5e dargestellten Ausführungen sind beispielhaft und stellen vorteilhafte einfache geometrische Formen für das einzelne Ausgleichelement dar. Andere Ausführungen sind denkbar und die erfindungsgemäße Lösung ist nicht auf die dargestellten Geometrien und genannten Materialien beschränkt. Entscheidend ist, dass sich an dem Ausgleichelement Abstützflächen befinden, die geeignet sind, mit Anlageflächenbereichen am Flachzapfen 19 und der Nabe 7 zusammenzuwirken.

Die einzelnen Ausgleichelemente 14 werden vorzugsweise zur Lagefixierung in Ausnehmungen bzw. Aussparungen 29 an einem der Bauteile, insbesondere der Nabe 7 eingelegt oder mit leichtem Übermaß in diese eingepresst. Um trotzdem bei Montage eine sichere Lagefixierung zu gewährleisten, ist die einzelne Ausnehmung 29 mit einem Hinterschnitt 30 ausgeführt, welcher auch einen Formschluss mit der Ausnehmung 29 ermöglicht. Ein Beispiel ist in Figur 6 wiedergegeben. Diese zeigt einen Ausschnitt aus einem Treffer 18, insbesondere die Ausnehmung 29.

Bezüglich der Ausbildung in Axialrichtung, das heißt parallel zur Rotationsachse des Walzenzapfens 8 betrachtet, können die einzelnen Ausgleichelemente 14 ebenfalls unterschiedlich ausgeführt sein. Die Figur 7a verdeutlicht in einem Axialschnitt eine erste Ausführung, bei welcher sich das einzelne Ausgleichelement 14 an der Flachseite 9 über den gesamten Erstreckungsbereich des möglichen Verbindungsbereiches 20 erstreckt. Auf die Darstellung der Nabe 7 wurde hier verzichtet. Das einzelne Ausgleichelement 14 ist in Axialrichtung einteilig ausgeführt. Vorzugsweise ist das Ausgleichelement 14 als Leistenelement ausgebildet, das sich im Verbindungsbereich 20 vom Anfang 22 bis zum Ende 23 erstreckend ausgebildet ist. Das Ausgleichelement 14 weist damit in axialer Richtung gleiche Eigenschaften auf.

Denkbar ist auch eine Ausführung gemäß Figur 7c, bei welcher eine Unterteilung erfolgt und lediglich die Anlageflächen 15 und 16 bildenden zumindest teilelastischen Abstützbereiche am Anfang 22 und am Ende 23 des Tragbereiches in axialer Richtung vorgesehen sind, um die einzelnen Abstützbereiche bildenden Elemente über einen Verbindungssteg 35 oder einen Träger 25 miteinander gekoppelt sind.

In einer alternativen Ausbildung dazu kann auch auf den Verbindungssteg 35 gemäß Figur 7c verzichtet werden. In diesem Fall sind im Verbindungsbereich 20 am Anfangs- und Endbereich 22, 23 jeweils separate Ausgleichelemente 14 vorgesehen, die voneinander entkoppelt sind, und in ihrer Funktion lediglich im Zusammenwirken mit dem Wellenzapfen 8 die Abstützung realisieren, wie in Figur 7b dargestellt.

Die Ausführungen, beschrieben in den Figuren 7a bis 7c sind mit den Ausführungen zur möglichen Anordnung quer zur Rotationsachse betrachtet, beschrieben in den Figuren 4a, 4b und den Ausführungen zur Ausbildung der Ausgleichelemente, beschrieben in den Figuren 5 sowie der Aussparungen 30 in Figur 6 kombinierbar. Denkbar ist auch eine hier nicht dargestellte Ausführung, bei welcher die in der Ausführung gemäß Figur 4b einer Flachzapfenseite 9 bzw. 10 zugeordneten Ausgleichelemente 14 jeweils von einem gemeinsamen Element gebildet werden. Dieses ist derart ausgeführt, dass es sich vorzugsweise über die gesamte Flachseite 9 bzw. 10 quer zur Rotationsachse betrachtet erstreckend ausgeführt ist und an den jeweiligen Endbereichen 24, das heißt mit weitester Entfernung zur Rotationsachse R, entsprechende, elastische Bereiche bildende Vorsprünge ausgebildet hat, die die Funktion der Ausgleichelemente 14 übernehmen.

Die Figur 8a zeigt eine besonders vorteilhafte Ausführung der Welle-Nabe-Verbindung 6 mit Ausführung der Ausgleichelemente 14 in Form von elastischen Leisten. Figur 8b zeigt eine vorteilhafte Ausbildung eines Ausgleichelementes 14 in einer Aussparung einer Nabe 7 im Detail.
Die Welle-Nabe-Verbindung 6 ist auch hier in einem Schnitt in einer Ebene wiedergegeben, die durch zwei Senkrechte zur Rotationsachse R beschreibbar ist und senkrecht zur Mittenebene E ausgerichtet ist. Erkennbar ist auch hier die den Walzenzapfen 8 in Form eines Flachzapfens 19 aufnehmende Öffnung 11 in der von einem Treffer 18 gebildeten Nabe 7. Der Walzenzapfen 8 ist in Richtung der Rotationsachse R in die Öffnung 11 eingeführt, das heißt in Axialrichtung. Die Kontur des Walzenzapfens 8 in Umfangsrichtung betrachtet entspricht unter Berücksichtigung eines zum Einführen erforderlichen geringen Spiels der Kontur der Öffnung 11, sodass ein Formschluss gegeben ist. Zwischen der Nabe 7 und dem Walzenzapfen 8 ist an den Flachzapfenseiten 9 und 10 zumindest jeweils ein elastisches Bauteil angeordnet. Im dargestellten Fall sind jeweils an zwischen jeder Flachzapfenseite 9 und 10 Ausgleichelemente 14 vorgesehen, die jeweils beidseits der Mittenebene E angeordnet sind und vorzugsweise im Bereich des Überganges zwischen den Flachzapfenseiten 9 und 10 und den abgerundeten Seiten des Flachzapfens 19 angeordnet sind. Zur Vorpositionierung weist die Nabe 7 Ausnehmungen 29 auf, die derart ausgebildet und ausgelegt sind, die Ausgleichelemente 14 zumindest teilweise aufzunehmen. Die Ausgleichelemente 14 werden dabei vor dem Fügen des Walzenzapfens 8 in die Ausnehmungen 29 eingelegt. Die Dimensionierung der Ausgleichelemente 14, insbesondere der verformbaren Bereiche an diesen im unbelasteten Zustand erfolgt derart, dass die Anordnung in den Ausnehmungen 29 mit Übergangs- oder Presspassung erfolgt. Dadurch werden die einzelnen Ausgleichelemente 14, die in Erstreckungsrichtung über den Verbindungsbereich in Form von Leisten ausgeführt sind, beim Einfahren des Walzenzapfens 8 in die Öffnung 11 an der Nabe 7 in ihrer Lage fixiert.
Der Träger 25 ist gemäß Figur 8b hier beispielhaft mit Spiel gegenüber der Ausnehmung eingeführt und liegt am Flachzapfen 19 an. Das Spiel wird über einen Spalt zwischen Träger 25 und Aussparung 29 realisiert. Dieser ist in einer ersten Richtung in Einbaulage betrachtet, welcher einer Richtung senkrecht zur Rotationsachse R entspricht, durch eine Länge L charakterisiert und in einer zweiten Richtung, senkrecht zur ersten Richtung und senkrecht zur Längsrichtung durch eine Weite W. Dadurch wird das Ausgleichelement 14 vollständig von Welle und Nabe, d.h. Treffer 18 und Flachzapfen 19 eingehaust. Bei Verformung ermöglicht der Spalt eine Aufnahme verformten Materials des elastischen, insbesondere verformbaren inkompressiblen Bereiches 31.
Denkbar, hier jedoch nicht dargestellt ist es ferner, sowohl den verformbaren inkompressiblen Bereiches 31 als auch den Träger 25 mit Spiel gegenüber der Aussparung 29 in der zweiten Richtung, d.h. quer zur Längsrichtung auszubilden. Die Fixierung erfolgt dann über Spielfreiheit in der ersten Richtung im unbelasteten Zustand.

Im dargestellten Fall sind die Ausgleichelemente 14 als Verbundbauteile ausgeführt, die einen ersten Bereich, beispielsweise gebildet von einem Träger 25 und einen zweiten Bereich 31, gebildet von einem Elastomer oder Kunststoff aufweisen, wie beispielsweise in Figur 5d beschrieben. Der Träger 25 bildet dabei einen festen ebenen Anlageteil mit der Anlagefläche 15 zur Anlage am Flachzapfen 19 und der elastische Bereich 31 bildet einen elastisch verformbaren Anlageteil mit der Anlagefläche 16.

Eine vorteilhafte Weiterbildung gemäß Figur 8a sieht in Figur 6 für die Nabe 7 vor, die Ausnehmungen 29 mit einem Hinterschnitt 30 auszuführen, sodass die Leisten entsprechend in radialer Richtung positioniert sind.

In einer alternativen, hier nicht dargestellten Ausführung ist es ebenfalls denkbar, die Positionierung am Walzenzapfen19 vorzunehmen. Dies setzt jedoch eine entsprechende Bearbeitung der Zapfenenden voraus.

Die Figur 9 verdeutlicht eine weitere vorteilhafte Ausführung unter Verwendung von mit Druckmittel beaufschlagbarer Ausgleichelemente 14. Auch hier sind beispielhaft vier Ausgleichelemente 14 vorgesehen, die an den Flachseiten 9 und 10 des Flachzapfens 19 bezogen auf die Mittenebene E zueinander diagonal angeordnet sind. Diese bilden sogenannte Pads und bestehen aus einer von einer zumindest elastische Wandbereiche 32 aufweisenden Wandung 33 umgebenen und mit Druckmittel, insbesondere einem inkompressiblen Fluid befüllbaren Kammer 34. Gemäß einer ersten Ausführung erfolgen eine einmalige Beaufschlagung und gegebenenfalls eine bei Leckage zum Ausgleich erfolgende Nachbeaufschlagung der Kammern 34 mit Druckmedium. In diesem Fall sind bei einer Ausführung mit vier Ausgleichelementen 14, die symmetrisch bezüglich einer Mittenebene angeordnet sind, jeweils die Diagonale einander gegenüberliegend, vorzugsweise hydraulisch miteinander gekoppelt. Dabei wird der elastische Bereich oder das Ausgleichelement 14, welches mit einem höheren Druck beaufschlagt wird, eine Verdrängung des Fluides in die Kammer 34 am diagonal gegenüberliegenden Ausgleichelement 14 und damit in einen Bereich mit niedrigerer Druckbeaufschlagung bewirken, sodass hier ein Druckausgleich stattfindet, was zu einer homogeneren Druckverteilung und so zu einer geringeren maximalen Flächenpressung führt.

Alternativ dazu besteht auch die Möglichkeit, einer aktiven externen Druckbeaufschlagung, womit sich eine Eliminierung des für den Fügevorgang notwendigen Spiels realisieren lässt. In diesem Fall erfolgt nach der Montage des Flachzapfens erst die Einstellung der Elastizität der Ausgleichelemente 14 zwischen Nabe 7 und Wellenzapfen 8.

Die in den vorgenannten Figuren beschriebene Welle-Nabe-Verbindung 6 ist in besonders vorteilhafter Ausführung in Walzwerken einsetzbar. Ein derartiger Antriebsstrang 1 ist bereits in der Figur 1 beispielhaft beschrieben. Die erfindungsgemäße Welle-Nabe-Verbindung 6 wird zwischen Gelenkwelle und Arbeitswalze 2 installiert. In vorteilhafter Ausbildung wird die Welle von einer Arbeitswalze und die Nabe von einem Zapfenaufnehmer gebildet.

### Bezugszeichenliste

- 1: Antriebsstrang
- 2: Walze, Arbeitswalze
- 3: Walzwerk
- 4: Antriebsmaschine
- 5: Gelenkwelle
- 6: Welle-Nabe-Verbindung
- 6': Welle-Nabe-Verbindung Stand der Technik
- 7: Nabe
- 7': Nabe - Stand der Technik
- 8: Walzenzapfen
- 8': Walzenzapfen - Stand der Technik
- 9: Flachzapfenseite
- 9': Flachzapfenseite - Stand der Technik
- 10: Flachzapfenseite
- 10': Flachzapfenseite - Stand der Technik
- 11: Öffnung im Treffer
- 11': Öffnung im Treffer - Stand der Technik
- 12: Flächenbereich am Flachzapfen
- 12': Flächenbereich am Flachzapfen - Stand der Technik
- 13: Flächenbereich an Innenumfang des Treffers
- 13': Flächenbereich an Innenumfang des Treffers -Stand der Technik
- 14: Ausgleichelement
- 15: Anlagefläche
- 16: Anlagefläche
- 17: Innenumfang Treffer
- 17': Innenumfang Treffer - Stand der Technik
- 18: Treffer, Zapfenaufnehmer
- 18': Treffer - Stand der Technik
- 19: Flachzapfen
- 19: Flachzapfen - Stand der Technik
- 20: Verbindungsbereich
- 21: Einrichtung zur flächigen Lasteinleitung
- 22: Anfangsbereich Verbindungsbereich in Längsrichtung
- 23: Endbereich Verbindungsbereich in Längsrichtung
- 24: Endbereich
- 25: Träger
- 26: Grundelement
- 27: Grundelement
- 28: Verbindungssteg
- 29: Aussparung
- 30: Hinterschnitt, Hinterschneidung
- 31: elastischer Bereich, verformbarer inkompressibler Bereich
- 32: Wandbereich
- 33: Wandung
- 34: Kammer
- 35: Verbindungssteg
- R: Rotationsachse
- E: Mittenebene
- W: Spaltweite
- L: Spaltlänge

## Patentansprüche

1. Drehfeste Welle-Nabe-Verbindung (6), insbesondere Walzenzapfen-Trefferverbindung für den Einsatz in Walzwerken (3), wobei zumindest ein Teilbereich einer um eine in Längsrichtung verlaufende Rotationsachse (R) rotierbaren Welle mit einer Nabe (7) unter Ausbildung eines Verbindungsbereiches (20) mit einer Spielpassung formschlüssig ineinandergreifend zueinander angeordnet sind und zwischen der Welle und der Nabe (7) eine Einrichtung (21) zur flächigen Lasteinleitung vorgesehen ist, wobei die Einrichtung (21) zumindest ein Ausgleichelement (14) umfasst, welches zumindest bei Drehmomentübertragung jeweils die Welle und die Nabe (7) flächig berührt
**dadurch gekennzeichnet,**
**dass** das einzelne Ausgleichelement (14) wenigstens einen verformbaren, weitestgehend inkompressiblen Bereich bildenden Teil und einen leistenförmigen Träger aufweist und der den inkompressiblen Bereich bildende Teil flächig am Innenumfang einer Aussparung (29) anliegt und die Aussparung an der Nabe (7) und/oder an der Welle vorgesehenen ist und das Ausgleichselement in der Aussparung (29) eingelegt oder eingepresst ist.

2. Drehfeste Welle-Nabe-Verbindung (6) nach Anspruch 1,
**dadurch gekennzeichnet,**
**dass** das einzelne Ausgleichelement (14) in den an der Nabe (7) und/oder an der Welle vorgesehenen Aussparungen (29) in einer ersten Richtung senkrecht zur Längsrichtung betrachtet zwischen Welle und Nabe frei von Spiel gegenüber Welle und Nabe und mit Spiel innerhalb der Aussparung in der Welle und/oder Nabe in einer zweiten Richtung senkrecht zur ersten Richtung betrachtet eingelegt oder eingepresst ist.

3. Drehfeste Welle-Nabe-Verbindung (6) nach einem der vorhergehenden Ansprüche,
**dadurch gekennzeichnet,**
**dass** die einzelne Aussparung (29) zumindest einen in radialer Richtung und/oder Längsrichtung wirksamen Hinterschnitt aufweist.

4. Drehfeste Welle-Nabe-Verbindung (6) nach einem der vorgenannten Ansprüche,
**dadurch gekennzeichnet,**
**dass** die Welle einen Zapfen, insbesondere Walzenzapfen (8) in nicht rotationssymmetrischer Ausführung aufweist, welcher jedoch zumindest bezüglich einer durch die Rotationsachse (R) und einer Senkrechten zu dieser beschreibbaren Mittenebene (E) symmetrisch ausgeführt ist und die Anordnung eines einzelnen Ausgleichelementes (14) gemäß zumindest einer der Anordnungen aus der nachfolgenden Gruppe oder einer Kombination aus diesen erfolgt:
- im Bereich der Mittenebene (E) und/oder
- von der Mittenebene (E) beabstandet.

5. Drehfeste Welle-Nabe-Verbindung (6) nach Anspruch 6,
**dadurch gekennzeichnet,**
**dass** zumindest zwei Ausgleichelemente (14) vorgesehen sind, die symmetrisch oder paarweise diagonal zur Mittenebene (E) zwischen Welle und Nabe (7) angeordnet sind, wobei die Anordnung derart erfolgt, dass diese in einer Drehrichtung wirksam sind und/oder
**dass** eine Mehrzahl von Ausgleichelementen (14) vorgesehen ist, die jeweils paarweise diagonal zur Mittenebene (E) zwischen Welle und Nabe (7) angeordnet sind, wobei die Anordnung derart erfolgt, dass zumindest ein Teil der Ausgleichelemente (14) in einer Drehrichtung und der andere Teil in der anderen Drehrichtung wirksam ist.

6. Drehfeste Welle-Nabe-Verbindung (6) nach einem der vorgenannten Ansprüche,
**dadurch gekennzeichnet,**
**dass** das einzelne Ausgleichelement zumindest teilweise aus einem Material mit einer Querkontraktionszahl im Bereich von My = 0,3 bis 0,5, besonders bevorzugt 0,5 ausgebildet ist.

7. Drehfeste Welle-Nabe-Verbindung (6) nach einem der Ansprüche 1 bis 9, **dadurch gekennzeichnet,**
**dass** das in einer Aussparung (29) aufgenommene Ausgleichelement (14) von einem leistenförmigen Träger und zumindest einen verformbaren, inkompressiblen Bereich bildenden Teil gebildet ist.

8. Drehfeste Welle-Nabe-Verbindung (6) nach einem der vorgenannten Ansprüche,
**dadurch gekennzeichnet,**
**dass** die Verformbarkeit des einzelnen verformbaren, weitestgehend inkompressiblen Bereiches als Funktion zumindest einer Größe oder einer Kombination aus der nachfolgend genannten Gruppe von Größen eingestellt ist:
- des Materials
- der Geometrie in Längsrichtung in Einbaulage
- der Geometrie quer zur Längsrichtung in Einbaulage.

9. Zapfenaufnehmer einer Gelenkspindel zur Aufnahme eines Zapfens (8) eines Anschlussaggregates, insbesondere Walze (2) zur Realisierung einer drehfesten Welle-Nabe-Verbindung (6) für den Einsatz in Walzwerken (3), mit einer in Längsrichtung verlaufenden Öffnung (11) zur Aufnahme eines Zapfens (8) eines um eine Rotationsachse (R) rotierbaren Anschlussaggregates, insbesondere einer Walze (2);
**dadurch gekennzeichnet,**
**dass** an der durch die Öffnung (11) beschreibbaren Innenumfangsfläche zumindest eine randoffene Aussparung (29) vorgesehen ist, in welcher ein Ausgleichelement (14) einer Einrichtung (21) zur flächigen Lasteinleitung form- und/oder kraftschlüssig aufgenommen ist, wobei das Ausgleichelement (14) eine Oberfläche aufweist, die zumindest zeitweise flächig am von der Aussparung (29) gebildeten Teilbereich der Innenumfangsfläche anliegt und
wobei das in der Aussparung aufgenommene Ausgleichselement von leistenförmigen Träger zur Bereitstellung einer flächigen Berührung zumindestens bei Drehmomentübertragung und von zumindest einem verformbaren, inkompressiblen Bereich bildenden Teil gebildet ist und der den inkompressiblen Bereich bildenden Teil flächig am Innenumfangsbereich der Aussparung (29) anliegt.

10. Zapfenaufnehmer nach Anspruch 9,
**dadurch gekennzeichnet,**
**dass** eine Mehrzahl von Ausgleichelemente (14) aufnehmenden Aussparungen (29) vorgesehen sind, die jeweils paarweise diagonal zur Mittenebene (E) angeordnet sind, wobei die Anordnung derart erfolgt, dass zumindest ein Teil der Ausgleichelemente (14) in einer Drehrichtung und der andere Teil in der anderen Drehrichtung wirksam ist.

11. Zapfenaufnehmer nach einem der Ansprüche 9 bis 10,
**dadurch gekennzeichnet,**
**dass** das einzelne Ausgleichelement (14) sich in Längsrichtung der Öffnung zumindest über einen Teilbereich erstreckend angeordnet ist und/oder dass eine Mehrzahl von Ausgleichelementen (14) vorgesehen ist, die
- jeweils in den in Längsrichtung der Öffnung (11) betrachtet liegenden Endbereichen und/oder
- über zumindest einen Teilbereich der Erstreckung der Öffnung in Längsrichtung betrachtet beabstandet zueinander angeordnet sind, wobei die Anordnung einzeln oder gekoppelt über ein die Ausgleichelemente (14) verbindendes Trägerelement erfolgt.

12. Zapfenaufnehmer nach einem der Ansprüche 9 bis 11,
**dadurch gekennzeichnet,**
**dass** das einzelne Ausgleichelement (14) zumindest teilweise aus zumindest einem Material oder einer Materialkombination aus der nachfolgenden Gruppe ausgeführt ist:
- Elastomer
- Kunststoff
- Faserverbundwerkstoff
- Hybrid aus einem Metall und einem der vorgenannten Materialien
- ein gekapseltes Fluid, insbesondere Flüssigkeit, wobei
das in einer Aussparung (29) aufgenommene Ausgleichelement (14) von einem leistenförmigen Träger und zumindest einen verformbaren , inkompressiblen Bereich bildenden Teil gebildet ist, wobei der inkompressiblen Bereich bildenden Teil flächig am Innenumfangsbereich der Aussparung (29) anliegt.

13. Zapfenaufnehmer nach einem der Ansprüche 9 bis 12,
**dadurch gekennzeichnet,**
**dass** das einzelne Ausgleichelement (14) zumindest eine mit einem inkompressiblen Fluid befüllbare Kammer (34) umfasst, wobei die die Kammer (34) umschließenden Wandbereiche (32) zumindest teilweise elastisch verformbar sind.

14. Zapfenaufnehmer nach Anspruch 13,
**dadurch gekennzeichnet,**
**dass** jeweils zwei diagonal zur durch die Längsrichtung der Öffnung (11) und einer Senkrechten zu dieser beschreibbaren Mittenebene (E) angeordnete Ausgleichelemente (14) miteinander hydraulisch gekoppelt sind.

15. Antriebsanordnung für ein Walzwerk zum Antrieb zumindest einer Arbeitswalze, welche über eine Gelenkwelle mit einer Antriebsmaschine gekoppelt ist, wobei zwischen Gelenkwelle und Arbeitswalze eine Verbindungseinrichtung in Form eines Treffers vorgesehen ist und die drehfeste Verbindung zwischen dem Treffer und der Arbeitswalze als Welle-Nabe-Verbindung gemäß einem der Ansprüche 1 bis 8 ausgeführt ist.

## Claims

1. Conjointly rotating shaft-hub connection (6), particularly roll journal-striker connection for use in rolling mills (3), at least one portion of a shaft that can be rotated about an axis of rotation (R) extending in the longitudinal direction being arranged to engage in a form-fitting manner with a hub (7), forming a connecting region (20) with a clearance, and a device (21) for the surface introduction of force being provided between the shaft and the hub (7), the device (21) comprising at least one compensating element (14), which makes respective surface contact with the shaft and the hub (7), at least during torque transmission,
**characterized in that**
the single compensating element (14) has at least one part forming a deformable, largely incompressible region and a strip-shaped support, and the part forming the incompressible region rests two-dimensionally on the inner circumference of a recess (29) and the recess is provided on the hub (7) and/or on the shaft, and the compensating element is inserted or pressed into the recess (29) .

2. Conjointly rotating shaft-hub connection (6) according to Claim 1,
**characterized in that**
the single compensating element (14) in the recesses (29) that are provided on the hub (7) and/or on the shaft, viewed in a direction perpendicular to the longitudinal direction, is inserted or pressed in between shaft and hub in a manner free of play with respect to shaft and hub and with play within the recess in the shaft and/or hub, viewed in a second direction perpendicular to the first direction.

3. Conjointly rotating shaft-hub connection (6) according to one of the preceding claims,
**characterized in that**
the single recess (29) has at least one undercut that is effective in the radial direction and/or longitudinal direction.

4. Conjointly rotating shaft-hub connection (6) according to one of the preceding claims,
**characterized in that**
the shaft has a journal, in particular roll journal (8), in a non-rotationally-symmetrical design but which is designed symmetrically, at least with respect to a mid-plane (E) that can be described by the axis of rotation (R) and a perpendicular to the latter, and the arrangement of a single compensating element (14) is made in accordance with at least one of the arrangements from the following group or a combination of the same:
- in the region of the mid-plane (E) and/or
- at a distance from the mid-plane (E).

5. Conjointly rotating shaft-hub connection (6) according to Claim 6,
**characterized in that**
at least two compensating elements (14) are provided, which are arranged symmetrically or in pairs diagonally with respect to the mid-plane (E) between shaft and hub (7), wherein the arrangement is made in such a way that these are effective in one direction of rotation, and/or
**in that** a plurality of compensating elements (14) is provided, which are in each case arranged in pairs diagonally with respect to the mid-plane (E) between shaft and hub (7), wherein the arrangement is made in such a way that at least some of the compensating elements (14) are effective in one direction of rotation and the others are effective in the other direction of rotation.

6. Conjointly rotating shaft-hub connection (6) according to one of the preceding claims,
**characterized in that**
the single compensating element is at least partly formed from a material having a transverse contraction number in the range My = 0.3 to 0.5, particularly preferably 0.5.

7. Conjointly rotating shaft-hub connection (6) according to one of Claims 1 to 9,
**characterized in that**
the compensating element (14) accommodated in a recess (29) is formed by a strip-like carrier and at least one part forming a deformable incompressible region.

8. Conjointly rotating shaft-hub connection (6) according to one of the preceding claims,
**characterized in that**
the deformability of the individual deformable, largely incompressible region is set as a function of a least one variable or a combination of the group of variables mentioned below:
- of the material
- of the geometry in the longitudinal direction in the installation position
- of the geometry transversely with respect to the longitudinal direction in the installation position.

9. Journal holder of an articulated spindle for holding a journal (8) of a connection assembly, in particular a roll (2) for implementing a conjointly rotating shaft-hub connection (6) for use in rolling mills (3), having an opening (11) extending in the longitudinal direction to hold a journal (8) of a connection assembly, in particular a roll (2), that can be rotated about an axis of rotation (R),
**characterized in that**
on the inner circumferential surface that can be described by the opening (11), at least one recess (29) open at the edge is provided, in which a compensating element (14) of a device (21) for the surface introduction of load is held in a form-fitting and/or force-fitting manner, wherein the compensating element (14) has a surface which rests at least temporarily in a two-dimensional manner on the portion of the inner circumferential surface that is formed by the recess (29), and wherein the compensating element held in the recess is formed by strip-like carriers for providing a two-dimensional contact, at least during torque transfer, and by at least one part forming a deformable, incompressible region, and the part forming the incompressible region rests two-dimensionally on the inner circumferential region of the recess (29).

10. Journal holder according to Claim 9,
**characterized in that**
a plurality of recesses (29) holding compensating elements (14) are provided, which are each arranged in pairs diagonally with respect to the mid-plane (E), wherein the arrangement is carried out in such a way that at least some of the compensating elements (14) are effective in one direction of rotation and the others are effective in the other direction of rotation.

11. Journal holder according to either of Claims 9 and 10,
**characterized in that**
the single compensating element (14) is arranged so as to extend in the longitudinal direction of the opening, at least over a portion, and/or **in that** a plurality of compensating elements (14) are provided, which
- are each arranged to be located in the end regions, viewed in the longitudinal direction of the opening, and/or
- are arranged at a distance from one another, viewed in the longitudinal direction over at least a portion of the extent of the opening, wherein the arrangement is made individually or coupled via a carrier element connecting the compensating elements (14).

12. Journal holder according to one of Claims 9 to 11, **characterized in that**
the single compensating element (14) is at least partly implemented from at least one material or a material combination from the following group:
- elastomer
- plastic
- fibre composite material
- hybrid of a metal and one of the aforementioned materials
- an encapsulated fluid, in particular liquid, wherein
the compensating element (14) held in a recess (29) is formed by a strip-like carrier and at least one part forming a deformable incompressible region, wherein the part forming the incompressible region rests two-dimensionally on the inner circumferential region of the recess (29) .

13. Journal holder according to one of Claims 9 to 12, **characterized in that**
the single compensating element (14) comprises at least one chamber (34) that can be filled with an incompressible fluid, wherein the wall regions (32) enclosing the chamber (34) are at least partly elastically deformable.

14. Journal holder according to Claim 13,
**characterized in that**
in each case two compensating elements (14) arranged diagonally with respect to a mid-plane (E) that can be described by the longitudinal direction of the opening (11) and a perpendicular to the latter are coupled hydraulically to one another.

15. Drive arrangement for a rolling mill for driving at least one work roll, which is coupled to a drive machine via an articulated shaft, wherein a connecting device in the form of a striker is provided between articulated shaft and work roll, and the conjointly rotating connection between the striker and the work roll is implemented as a shaft-hub connection according to one of Claims 1 to 8.

## Revendications

1. Liaison arbre-moyeu (6) solidaire en rotation, en particulier liaison arbre-moyen par manchon d'accouplement destinée à être utilisée dans des laminoirs (3), au moins une région d'un arbre, pouvant tourner sur un axe de rotation longitudinal (R), et un moyeu (7) étant disposés de manière à s'engager l'un dans l'autre par complémentarité de formes en formant une région de liaison (20) présentant un ajustement avec jeu et un moyen (21) étant prévu entre l'arbre et le moyeu (7) pour introduire des charges de manière sensiblement bidimensionnelle, le moyen (21) comprenant au moins un élément de compensation (14) qui est en contact surfacique avec l'arbre et le moyeu (7) au moins pendant la transmission de couple,
**caractérisée en ce que**
l'élément de compensation (14) individuel comporte au moins une partie, formant une région déformable et dans une très large mesure incompressible, et un support en forme de bande, et la partie formant la région incompressible vient en appui surfacique sur la circonférence intérieure d'un évidement (29) et l'évidement est prévu au niveau du moyeu (7) et/ou de l'arbre et l'élément de compensation est inséré ou enfoncé dans l'évidement (29).

2. Liaison arbre-moyeu (6) solidaire en rotation selon la revendication 1,
**caractérisée en ce que**
l'élément de compensation (14) individuel est inséré ou enfoncé dans les évidements (29), prévus au niveau du moyeu (7) et/ou au niveau de l'arbre, entre l'arbre et le moyeu sans jeu par rapport à l'arbre et au moyeu lorsque l'on regarde dans une première direction perpendiculaire à la direction longitudinale et avec jeu à l'intérieur de l'évidement dans l'arbre et/ou le moyeu lorsque l'on regarde dans une deuxième direction perpendiculaire à la première direction.

3. Liaison arbre-moyeu (6) solidaire en rotation selon l'une des revendications précédentes, car
actérisée en ce que
l'évidement individuel (29) comporte au moins une contre-dépouille opérante dans la direction radiale et/ou dans la direction longitudinale.

4. Liaison arbre-moyeu (6) solidaire en rotation selon l'une des revendications précédentes, car
actérisée en ce que
l'arbre comporte un tourillon, en particulier un tourillon de cylindre (8), qui n'est pas conçu à symétrie de révolution mais qui est conçu pour être symétrique au moins par rapport à un plan médian (E) passant par l'axe de rotation (R) et une perpendiculaire à celui-ci et l'agencement d'un élément de compensation (14) individuel est effectué au moins selon l'un des agencements comprenant le groupe suivant ou une combinaison de ceux-ci :
- dans la région du plan médian (E) et/ou
- à distance du plan médian (E).

5. Liaison arbre-moyeu (6) solidaire en rotation selon la revendication 6,
**caractérisée en ce que**
au moins deux éléments de compensation (14) sont prévus qui sont disposés entre l'arbre et le moyeu (7) symétriquement ou par paires en diagonale par rapport au plan médian (E), l'agencement étant effectué de manière à être opérant dans un sens de rotation et/ou
une pluralité d'éléments de compensation (14) est prévue, lesquels sont disposés entre l'arbre et le moyeu (7) par paires en diagonale par rapport au plan médian (E), l'agencement étant effectué de manière à ce qu'au moins une partie des éléments de compensation (14) soit opérante dans un sens de rotation et l'autre partie soit opérante dans l'autre sens de rotation.

6. Liaison arbre-moyeu (6) solidaire en rotation selon l'une des revendications précédentes, car
actérisée en ce que
l'élément de compensation individuel est formé au moins en partie à partir d'un matériau dont l'indice de contraction transversale est dans la gamme allant de My = 0,3 à 0,5, de manière particulièrement préférée est de 0,5.

7. Liaison arbre-moyeu (6) solidaire en rotation selon l'une des revendications 1 à 9,
**caractérisée en ce que**
l'élément de compensation (14), reçu dans un évidement (29), est formé par un support en forme de bande et au moins une partie formant une région déformable et incompressible.

8. Liaison arbre-moyeu (6) solidaire en rotation selon l'une des revendications précédentes, car
actérisée en ce que
la déformabilité de la région individuelle déformable et dans une très large mesure incompressible est définie en fonction d'au moins une grandeur ou d'une combinaison du groupe de grandeurs mentionné ci-dessous :
- la matière
- la géométrie dans le sens longitudinal en position montée
- la géométrie transversalement à la direction longitudinale en position montée.

9. Récepteur de tourillon d'une broche articulée destinée à recevoir un tourillon (8) d'une unité de raccordement, en particulier d'un cylindre (2), pour réaliser une liaison arbre-moyeu (6) solidaire en rotation destinée à être utilisée dans des laminoirs (3), le récepteur de tourillon comprenant une ouverture (11) s'étendant dans la direction longitudinale et destinée à recevoir un tourillon (8) d'une unité de raccordement pouvant tourner sur un axe de rotation (R), en particulier d'un cylindre (2),
**caractérisé en ce que**
au moins un évidement (29) à bord ouvert est prévu au niveau de la surface périphérique intérieure, qui peut être décrite par l'ouverture (11), évidement dans lequel un élément de compensation (14) d'un moyen (21) est reçu en force et/ou par complémentarité de formes pour introduire des charges de manière sensiblement bidimensionnelle, l'élément de compensation (14) comportant une surface qui vient au moins temporairement en appui surfacique sur la région de la surface périphérique intérieure qui est formée par l'évidement (29) et l'élément de compensation reçu dans l'évidement étant formé par un support en forme de bande destiné à fournir un contact surfacique au moins pendant la transmission de couple et par au moins une partie formant une région déformable et incompressible et la partie qui forme la région incompressible venant en appui surfacique sur la partie périphérique intérieure de l'évidement (29).

10. Récepteur de tourillon selon la revendication 9, **caractérisé en ce que**
des évidements (29) recevant une pluralité d'éléments de compensation (14) sont prévus, lesquels sont disposés par paires en diagonale par rapport au plan médian (E), l'agencement étant effectué de manière à ce qu'au moins une partie des éléments de compensation (14) soit opérante dans un sens de rotation et l'autre partie soit opérante dans l'autre sens de rotation.

11. Récepteur de tourillon selon l'une des revendications 9 à 10,
**caractérisé en ce que**
l'élément de compensation (14) individuel est disposé de manière à s'étendre dans la direction longitudinale de l'ouverture au moins sur une région et/ou **en ce qu'**une pluralité d'éléments de compensation (14) est prévue, lesquels sont chacun disposés
- dans les régions d'extrémité lorsque celles-ci sont observées dans la direction longitudinale de l'ouverture (11) et/ou
- à distance les uns des autres sur au moins une région de l'extension de l'ouverture lorsqu'ils sont observés dans la direction longitudinale, l'agencement étant effectué individuellement ou de manière accouplée par le biais d'un élément de support reliant les éléments de compensation (14).

12. Récepteur de tourillon selon l'une des revendications 9 à 11,
**caractérisé en ce que**
l'élément de compensation (14) individuel est formé au moins en partie d'au moins un matériau ou d'une combinaison de matériaux du groupe suivant :
- un élastomère
- une matière synthétique
- un matériau composite renforcé par des fibres
- un hybride formé d'un métal et de l'un des matériaux susmentionnés
- un fluide encapsulé, notamment un liquide, l'élément de compensation (14) reçu dans un évidement (29) étant formé par un support en forme de bande et au moins une partie formant une région déformable et incompressible, la partie qui forme la région incompressible venant en appui surfacique sur la région périphérique intérieure de l'évidement (29).

13. Récepteur de tourillon selon l'une des revendications 9 à 12,
**caractérisé en ce que**
l'élément de compensation (14) individuel comprend au moins une chambre (34) pouvant être remplie d'un fluide compressible, les régions de paroi (32) qui entourent la chambre (34) étant au moins en partie déformables élastiquement.

14. Récepteur de tourillon selon la revendication 13, **caractérisé en ce que**
deux éléments de compensation (14) disposés en diagonale par rapport au plan médian (E), passant par la direction longitudinale de l'ouverture (11) et une perpendiculaire à celle-ci, étant accouplés hydrauliquement l'un à l'autre.

15. Ensemble d'entraînement d'un laminoir destiné à entraîner au moins un cylindre de travail qui est accouplé à une machine d'entraînement par le biais d'un arbre articulé, un moyen de liaison qui se présente sous la forme d'un manchon d'accouplement étant prévu entre l'arbre articulé et le cylindre de travail et la liaison solidaire en rotation entre le manchon d'accouplement et le cylindre de travail étant conçue comme une liaison arbre-moyeu selon l'une des revendications 1 à 8.
